# EUROPÄISCHE PATENTSCHRIFT

(11) **EP 1 728 577 B1**
(45) Veröffentlichungstag und Bekanntmachung des Hinweises auf die Patenterteilung: **12.03.2008**
(21) Anmeldenummer: 06009390.3
(22) Anmeldetag: 06.05.2006
(51) Int. Cl.: B23G 1/34, B23C 3/04, B23Q 5/10, B23Q 1/70

(54) **Aussenwirbelvorrichtung mit einem Wirbelaggregat angetrieben von einem Torquemotor**
Milling machine with internal cutter driven by a torque motor
Machine de fraisage externe avec fraise creuse entraînée par un moteur-couple

(30) Priorität: 31.05.2005 DE 102005025352
(43) Veröffentlichungstag der Anmeldung: 06.12.2006
(73) Patentinhaber: Leistritz Aktiengesellschaft, 90459 Nürnberg (DE)
(72) Erfinder: Theusner, Klaus, 34414 Warburg (DE)
(74) Vertreter: Blaumeier, Jörg

(56) Entgegenhaltungen:
- EP-A- 0 698 437
- EP-A- 1 287 932
- EP-A- 1 466 684
- DE-A1- 10 020 111
- DE-B- 1 116 032

## Beschreibung

Die Erfindung betrifft eine Außenwirbelvorrichtung mit einem Wirbelaggregat mit einer bezüglich eines feststehenden Teils drehbar gelagerten Aufnahme für einen Wirbelring, sowie einer motorischen Antriebseinrichtung zum Antreiben der Aufnahme. EP-1466684-A offenbart eine Vorrichtung nach dem Oberbegriff von Anspruch 1.

Das Wirbeln ist eine Sonderform des Fräsens und dient dazu, an einem Werkstück im Falle einer Außenwirbelvorrichtung Außengewindeprofile oder Exzenterprofile oder dergleichen auszubilden. Im Außenwirbelverfahren werden beispielsweise Getriebeschnecken oder Extruderschnecken oder Exzenterschnecken oder dergleichen hergestellt. Kernstück einer Außenwirbelvorrichtung ist das Wirbelaggregat, das eine Aufnahme für einen Wirbelring, an dem die Schneidmesser angeordnet sind, aufweist. Diese Aufnahme ist drehbar gelagert und mit einem Antriebsmotor gekoppelt. Dabei sind zwei grundsätzliche Ausführungsformen bekannt. Bei einer ersten Ausführungsform ist der Antriebsmotor parallel zur Drehachse der Aufnahme angeordnet und mit dieser über einen Riemenantrieb gekoppelt. Der Elektromotor muss relativ groß dimensioniert sein, um die für das Wirbeln benötigten hohen Drehmomente und hohen Drehzahlen zur Verfügung stellen zu können. Der Antriebsmotor ist seitlich am Wirbelaggregatgehäuse angeflanscht, so dass das Wirbelaggregat insgesamt sehr weit zur Seite hin aufbaut, was hinsichtlich des Schwenkwinkels des häufig schwenkgelagerten Wirbelaggregats bezüglich des Werkstücks nachteilig ist, da der Winkel infolge des seitlich angeordneten Motors begrenzt ist. Der Riemenantrieb unterliegt im Betrieb zwangsläufig Verschleißerscheinungen, auch resultiert hieraus ein gewisser Leistungsverlust hinsichtlich des erzeugten und tatsächlich übertragenen Drehmoments.

Bei einer zweiten üblichen Bauform ist der ebenfalls im Hinblick auf die geforderten Leistungsparameter relativ groß zu dimensionierende Antriebsmotor mit seiner Abtriebswelle senkrecht zur Drehachse der Aufnahme stehend angeordnet und über ein Übersetzung- oder Kegelradgetriebe mit der Aufnahme gekoppelt. Auch hier stellen sich die baulich bedingten Nachteile ein, ferner ist die gesamte Auslegung sehr aufwändig im Hinblick auf das einzusetzende Übersetzungs- oder Kegelradgetriebe. Beide Ausführungsformen mit jeweils einem indirekten Antrieb bzw. einer indirekten Kopplung der Aufnahme mit dem Antriebsmotor sind infolgedessen verbesserungswürdig.

Der Erfindung liegt damit das Problem zugrunde, eine Wirbelvorrichtung anzugeben, bei der das Wirbelaggregat zur Vermeidung oben genannter Nachteile verbessert ist.

Zur Lösung dieses Problems ist eine Außenwirbelvorrichtung gemäß Anspruch 1 vorgesehen.

Bei der erfindungsgemäßen Außenwirbelvorrichtung ist als Antriebseinrichtung ein elektromagnetischer Torquemotor vom Innenläufertyp vorgesehen, der integraler Bestandteil des Wirbelaggregats ist. Das heißt, die Antriebseinrichtung ist nicht als Zusatzbauteil am Wirbelaggregat vorgesehen, wie bei den bisher bekannten Bauformen, vielmehr wird erfindungsgemäß die Antriebseinrichtung direkt in das Wirbelaggregat integriert. Sie dient bzw. arbeitet als Direktantrieb und wirkt unmittelbar mit der Aufnahme zusammen, was eine sehr kompakte Bauform ohne zusätzlich Bauelemente ermöglicht.

Infolge der Integration der Antriebseinrichtung in Form des Torquemotors direkt in das Wirbelaggregat kann die gesamte Bauform des Wirbelaggregats, nachdem keine seitlich angeflanschten Elemente mehr vorgesehen sind, sehr kompakt und klein dimensioniert werden, so dass die diesbezüglich im Stand der Technik gegebenen Schwierigkeiten, die sich nicht zuletzt auf die optional vorgesehene Verschwenkbarkeit auswirken, nicht gegeben sind. Infolge des Direktantriebs bzw. der direkten Kopplung des Torquemotors mit der Aufnahme sind auch keine zusätzlichen Kopplungsmittel wie Riementrieb oder Übersetzungs- oder Kegelradgetriebe erforderlich, so dass zum einen die daraus resultierenden leistungsreduzierenden Probleme beseitigt sind, zum anderen wirkt sich dies vorteilhaft auf die Herstellungskosten des Wirbelaggregats aus. Ein weiterer beachtlicher Vorteil des Einsatzes eines integrierten Direktantriebs in Form des Torquemotors besteht schließlich darin, dass verglichen mit einem üblichen Elektromotor deutlich höhere Drehzahlen und deutlich höhere Drehmomente übertragen werden können.

Bei einem Torquemotor handelt es sich um einen Rundmotor, bei dem der Rotor und der Stator radial gesehen hintereinander bzw. ineinander liegen. Dies ermöglicht es mit besonderem Vorteil, den Torquemotor so zu integrieren, dass die Aufnahme und das feststehende Teil sowie der integrierte Torquemotor radial gesehen ebenfalls im Wesentlichen hintereinander liegen. Das heißt, die axiale Bautiefe kann, verglichen mit bisherigen Bauformen, deutlich reduziert werden, was sich insbesondere dann, wenn eine optionale Schwenkmöglichkeit vorgesehen ist, besonders vorteilhaft auswirkt, als der Schwenkwinkel infolge der sehr geringen axialen Länge deutlich größer ist als bei bisher bekannten Aggregaten.

Eine äußerst kompakte Bauform wird dann erreicht, wenn der Stator des elektromagnetischen Torquemotors im feststehenden Teil des Wirbelaggregats integriert ist, während der Rotor an der Aufnahme integriert ist, wobei das feststehende Teil im Wesentlichen U-förmig mit dem zwischen den Schenkeln vorgesehenen Stator ausgeführt ist und mit seinem innenliegenden Schenkel über wenigstens ein Lager, insbesondere ein Wälz- oder Gleitlager, mit einem Schenkel der Aufnahme gekoppelt ist, während der an der Aufnahme vorgesehene Rotor in das feststehende Teil, dem Stator gegenüberliegend, geführt ist. Letztlich sind beide Teile, also feststehendes Teil und Aufnahme, im Wesentlichen U-förmig und umgekehrt bezüglich einander angeordnet, so dass sie quasi ineinander greifen, wobei im Falle der Aufnahme der Rotor des Torquemotors selbst einen Teil, nämlich den Außenschenkel des U-Profils bildet.

Die Möglichkeit, ein äußerst kompaktes Wirbelaggregat zu realisieren, lässt es weiterhin zu, am feststehenden Teil wenigstens einen mit einer Kühlmittelleitung verbindbaren Kühlmittelkanal vorzusehen, der ohne weiteres in beliebiger Form um das gesamte Wirbelaggregat geführt werden kann, um eine optimale Kühlung zu erzielen.

Wie beschrieben ist es möglich, wenngleich nicht zwingend erforderlich, das Wirbelaggregat um eine Schwenkachse verschwenkbar zu lagern, das heißt, es ist möglich, die Drehachse der Aufnahme und damit des Wirbelrings bezüglich der feststehenden Werkstückachse zu verschwenken. Zu diesem Zweck sind am Wirbelaggregat bevorzugt zwei einander gegenüberliegende Lagerzapfen vorgesehen, die in entsprechenden Lageraufnahmen einer feststehenden Aggregathalterung, über die das Wirbelaggregat am Vorrichtungsgestell angeordnet ist, aufgenommen sind. Die Verschwenkung kann beispielsweise über eine NC-Schwenkachse, also eine numerisch gesteuerte Schwenkachse bzw. einen numerisch gesteuerten Achsenantrieb erfolgen, gleichermaßen ist aber auch ein Schneckentrieb zum Verschwenken verwendbar.

Um das Wirbelaggregat auch hinsichtlich der Halterung des Wirbelrings und damit hinsiclitlich seiner Auswechselbarkeit und mithin also der gesamten Bedienbarkeit zu verbessern, sind zweckmäßigerweise an der Aufnahme Klemmhaltemittel vorgesehen, die bei Betätigung den Wirbelring sowohl axial als auch radial klemmen. Die Klemmhaltemittel bilden ein Schnellwechselsystem, das mit relativ wenig Klemmhaltemitteln, beispielsweise nur drei oder wenig mehr Klemmhaltemittel in Form entsprechender Klemmknebel, die symmetrisch verteilt sind, auskommt. Nach dem Einsetzen eines Wirbelrings in die Aufnahme sind lediglich die Klemmknebel oder dergleichen von der Freigabe- in die Klemmposition zu schwenken. Hierbei bewegt sich die Klemmfläche eines Klemmknebels sowohl axial als auch radial zum Wirbelring, so dass dieser fest in die Aufnahme gespannt wird. Dabei weist die Aufnahme zweckmäßigerweise eine federnde kegelige Anlagefläche auf, gegen die der eine entsprechende Gegenfläche aufweisende Wirbelring in der Montagestellung gespannt ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Außenwirbelvorrichtung,
- Fig. 2: eine Perspektivansicht eines Wirbelaggregats der Wirbelvorrichtung aus Fig. 1,
- Fig. 3: eine Schnittansicht durch das Wirbelaggregat aus Fig. 2,
- Fig. 4: eine Teilschnittansicht in vertikaler Richtung durch das Wirbelaggregat aus Fig. 2, und
- Fig. 5: eine Schnittansicht durch die Aufnahme mit einer Teilschnittansicht des Wirbelrings.

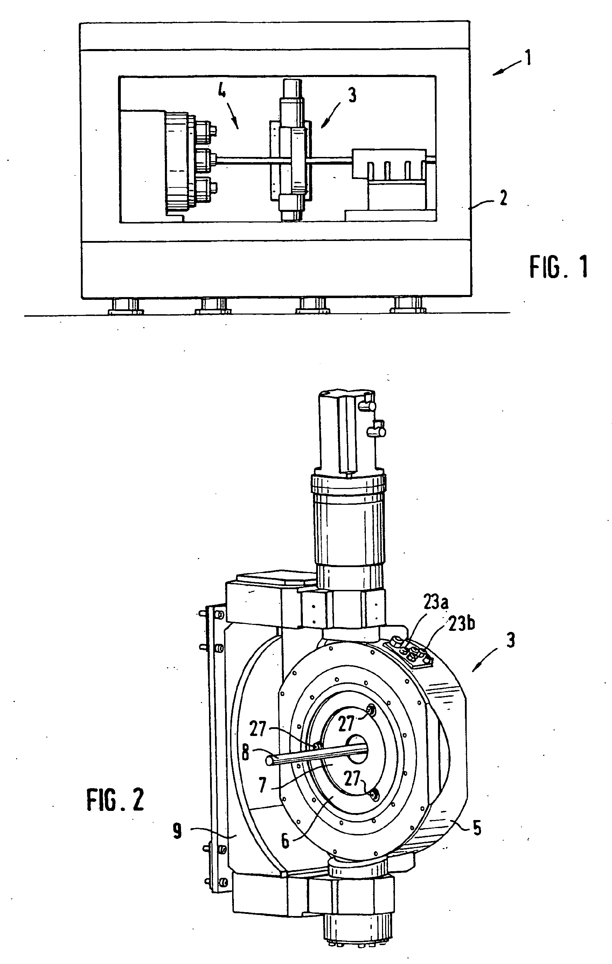

Fig. 1 zeigt eine erfindungsgemäße Außenwirbelvorrichtung 1, umfassend ein Vorrichtungsgestell oder Vorrichtungsgehäuse 2, in dem ein Wirbelaggregat 3, das nachfolgend noch näher beschrieben wird, aufgenommen ist. An einer Spanneinrichtung 4 kann ein über das Wirbelaggregat 3 zu bearbeitendes Werkstück, beispielsweise eine mit einem Gewinde zu versehene Stange, gehaltert und gespannt werden, wobei normalerweise das Werkstück über die Spanneinrichtung 4 um seine Längsachse gedreht und das Wirbelaggregat längs des Werkstücks verfährt, während es arbeitet. Der grundsätzliche Aufbau einer solchen Außenwirbelvorrichtung ist dem Fachmann hinlänglich bekannt und muss nicht näher beschrieben werden, nachdem es hier zentral auf den Aufbau des Wirbelaggregats ankommt.

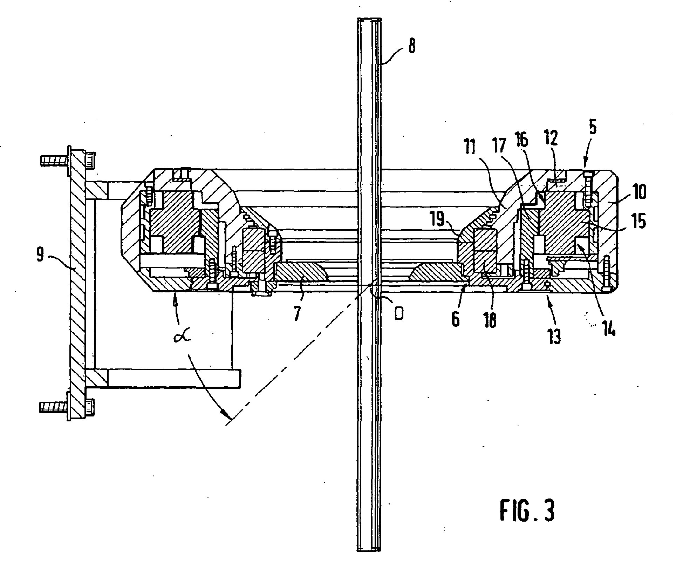

Ein solches Wirbelaggregat ist in detaillierter Ansicht in Fig. 2 gezeigt. Es besteht aus einem äußeren, feststehenden Teil 5 sowie einem inneren, bezüglich des feststehenden Teils 5 drehbeweglichen Teil, nämlich der Aufnahme 6, in der im gezeigten Beispiel ein Wirbelring 7 aufgenommen ist. Fig. 3 zeigt eine Schnittansicht durch das Wirbelaggregat 3 aus Fig. 2, wobei in die Fig. 2 und 3 ein zu bearbeitendes Werkstück 8 eingezeichnet ist.

Ersichtlich ist das äußere, feststehende Teil, das mit einem Aggregatträger 9, der am Vorrichtungsgehäuse oder Vorrichtungsgestell 2 befestigt ist, verbunden ist, im Wesentlichen U-förmig ausgeführt, es besitzt also einen äußeren Schenkel 10, einen inneren Schenkel 11 sowie eine Basis 12 (Querschenkel), wobei selbstverständlich das feststehende Teil 5 auch aus mehreren Elementen, die miteinander verbunden sind, wie in Fig. 3 dargestellt ist, bestehen kann.

Integriert in das Wirbelaggregat 3 ist ein Torquemotor 13, der hier als Innenläufer ausgeführt ist. Er besteht aus einem Stator 14, von dem hier nur der die Windungen, die nicht näher dargestellt sind, tragende Träger 15 dargestellt ist. Dieser Stator 14 ist in der U-förmigen Ausnehmung 16 am feststehenden Teil 5 integriert angeordnet und festgelegt. Ihm gegenüber ist über einen Luftspalt getrennt der Rotor 17 des Torquemotors 13 angeordnet, der wiederum fest mit der über ein doppelreihiges Axial-Radial-Wälzlager 18 drehbar gelagerten Aufnahme 6 verbunden ist. Die Aufnahme 6 ist in Verbindung mit dem an ihr angeordneten Rotor 17, bei dem es sich um ein mit Permanentmagneten belegtes Bauteil handelt, das elektromagnetisch mit dem Stator bzw. den dortigen Wicklungen bzw. den über diese bei Bestromen erzeugten Magnetfeldern wechselwirkt, ebenfalls U-förmig ausgeführt. Der Rotor 17 bildet den äußeren Schenkel, mit dem die Aufnahme 6 in das feststehende Teil 5 eingreift, wobei in der Montagestellung, siehe Fig. 3, der Rotor 17 mit seiner aktiven wechselwirkenden Fläche dem Stator 14 gegenüberliegt.

Die Drehlagerung der Aufnahme 6 bezüglich des feststehenden Teils 5 erfolgt über das Axial-Radial-Lager 18, wobei die Aufnahme 6 mit ihrem inneren Schenkel 19 innenseitig über das Axial-Radial-Wälzlager an der Außenseite des Schenkels 11 des feststehenden Teils 5 gelagert ist.

Im Betrieb werden die statorseitigen Wicklungen zur Erzeugung entsprechender Magnetfelder bestromt, worüber infolge der Wechselwirkung mit dem Rotor ein Drehmoment auf die Aufnahme 6 ausgeübt wird, wobei mit derartigen Motoren sehr hohe Drehmomente erzeugt werden können. Es kann eine hohe Packungsdichte der einzelnen gewickelten Spulen oder Erregerwicklungen erreicht werden, was zu entsprechend hohen, erzielbaren magnetischen Kräften führt. Der Betrieb zeichnet sich durch einen sehr weichen Lauf ohne spürbares Rastmoment aus.

Nachdem bei dem erfindungsgemäßen Wirbelaggregat ausschließlich das Axial-Radial-Wälzlager 18 mechanischen Beanspruchungen unterworfen ist, ist der Torquemotor selbst weitestgehend wartungsfrei, lässt aber gleichwohl sehr hohe Drehmomente und sehr hohe Drehzahlen zu.

Ersichtlich kann ein vollständiger radialer Aufbau realisiert werden, was auf die erfindungsgemäße Ausführung des feststehenden Teils 5 und der Aufnahme 6 als einander entgegengesetzte, querschnittlich U-förmig profilierte Elemente zurückzuführen ist, die eine extrem dichte Packung und Integration ermöglichen. Ersichtlich schließen quasi der Wirbelring 7, die Aufnahme 6, der Torquemotor 13 sowie das feststehende Teil 5 in ihren einzelnen Komponenten im Wesentlichen radial aneinander an, der axiale Aufbau ist minimal und wird im Wesentlichen durch die axiale Auslegung des Torquemotors 13 bestimmt.

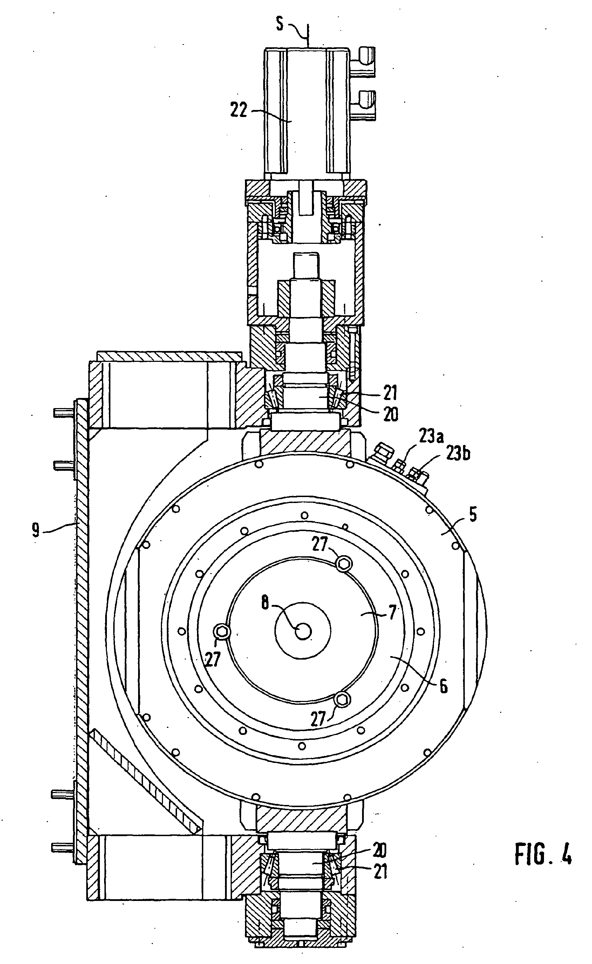

Das Wirbelaggregat 3 ist bezüglich des Aggregatträgers 9 um eine Drehachse D verschwenkbar, wozu das zentrale, mittige Wirbelaggregatteil, definiert über das feststehende Teil 5, um eine Schwenkachse S, siehe Fig. 4, schwenkgelagert ist. Hierzu sind am feststehenden Teil 5 entsprechende Wellenzapfen 20 ober- und unterseitig angeordnet, die im gezeigten Beispiel über entsprechende Kegelrollenlager 21 in entsprechenden Lageraufnahmen drehgelagert sind. Der obere Wellenzapfen 20 ist beispielsweise über einen NC-Antrieb 22, mit dem er gekoppelt oder koppelbar ist, um die Achse S verschwenkbar. Der Schwenkwinkel α, siehe Fig. 3, kann bis zu 50° betragen, bei nach wie vor hinreichend großer Aufnahmebohrung zum Durchführen des Werkstücks 8. Dies resultiert aus dem extrem schmalen axialen Aufbau des gesamten Wirbelaggregats 3.

In Fig. 2 gezeigt sind ferner Anschlussmittel 23a - 23b zum Anschließen einer Kühlmittelzufuhrleitung sowie einer Kühlmittelrückführleitung zu einem Reservoir bzw. einer Pumpe. Der erfindungsgemäße, quasi radiale Aufbau ermöglicht es ohne weiteres, entsprechende Kühlkanäle im feststehenden Teil zu führen, in denen Kühlmittel zirkuliert, wodurch eine sehr gute Kühlung des Wirbelaggregats ermöglicht wird.

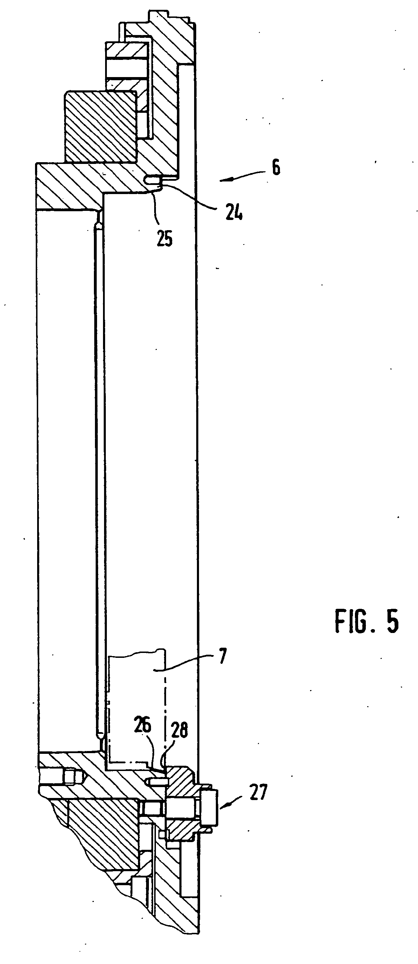

Fig. 5 zeigt schließlich in vergrößerter Ansicht die Aufnahme 6 ohne eingesetztem Wirbelring. An der Aufnahme 6 ist eine federnde, kegelige Zunge 24 mit einer kegeligen Anlagefläche 25 vorgesehen, gegen die der nur ausschnittsweise gezeigte Wirbelring 7 mit einer entsprechenden profilierten Gegenlagerfläche 26 gespannt ist. Hierüber wird eine automatische Zentrierung erreicht, zum anderen kann ein sehr fester und exakter Spannsitz realisiert werden. Hierzu dient die ebenfalls erfindungsgemäß vorgesehene Schnellwechselbefestigung unter Verwendung von verschiedenen Klemmmitteln 27, die so ausgeführt sind, dass sie beispielsweise als Schrauben oder Klemmdrehhebel ausgebildet sind, und die beim Anziehen zum einen eine Axialbewegung vollziehen und damit auch den Wirbelring 7 axial bewegen, zum anderen bewegt sich ihre freie Klemmkante oder Fläche 28 während dieser Bewegung radial nach innen und übergreift randseitig den Wirbelring. Hierüber kann ein sehr schnelles und einfach handzuhabendes Spannen des Wirbelrings erreicht werden. Im gezeigten Beispiel sind lediglich drei derartiger Klemmmittel 27 vorgesehen, die eine exakte Zentrierung und Klemmung ermöglichen. Es können aber bei Bedarf, insbesondere bei großen zu klemmenden Wirbelringen, auch mehrere derartige Klemmmittel vorgesehen sein.

Das erfindungsgemäße kompakte Wirbelaggregat mit dem integrierten Torquemotor kann für alle beliebigen Außenwirbelvorrichtungen verwendet werden. Verglichen mit üblichen elektromotorischen Antrieben kann durch Einsatz des Torquemotors über das Wirbelaggregat ein wesentlich höheres Drehmoment erzeugt sowie wesentlich höhere Drehzahlen gefahren werden. Die Verschleißerscheinungen sind, nachdem es sich bei dem Torquemotor um einen berührungslosen Motor handelt, vernachlässigbar, der kompakte, axial sehr kurze Aufbau lässt einen sehr großen Verschwenkwinkel bei nach wie vor hinreichend großer Werkstücköffnung zu. Wenngleich in den Figuren ein schwenkbares Wirbelaggregat beschrieben ist, so ist die Verschwenkmöglichkeit nicht zwingend vorzusehen, nachdem nicht jeder Wirbelvorgang oder nicht jedes zu wirbelnde Werkstück eine winkelige Anstellung des Wirbelrings 7 erfordert. Einhergehend mit dem sehr kompakten Aufbau des Wirbelaggregats geht auch die Möglichkeit, das Vorrichtungsgehäuse der Außenwirbelvorrichtung entsprechend kleiner bzw. vom Platz her optimiert zu gestalten, nachdem wie im Stand der Technik der große, ausladende elektromotorische Antrieb vollständig entfällt. Es ist lediglich der Stator 14 des Torquemotors 13 mit den entsprechenden Zuleitungen, über die die Bestromung der einzelnen Wicklungen erfolgt, zu verbinden.

## Patentansprüche

1. Außenwirbelvorrichtung mit einem Wirbelaggregat mit einer bezüglich eines feststehenden Teils drehbar gelagerten Aufnahme für einen Wirbelring, sowie einer motorischen Antriebseinrichtung zum Antreiben der Aufnahme, wobei die Antriebseinrichtung ein Torquemotor (13) vom Innenläufertyp ist, **dadurch gekennzeichnet, dass** der Torquemotor (13) in das Wirbelaggregat (3) integriert ist und als Direktantrieb unmittelbar mit der Aufnahme (6) zusammenwirkt, wobei der Stator (14) des elektromagnetischen Torquemotors (13) im feststehenden Teil (5) des Wirbelaggregats (3) integriert ist, während der Rotor (17) an der Aufnahme (6) integriert ist, wobei das feststehende Teil (5) im Wesentlichen U-förmig mit dem zwischen den Schenkeln (10, 11) vorgesehenem Stator (14) ausgeführt ist und mit seinem innenliegenden Schenkel (1) über wenigstens ein Lager (18) mit einem Schenkel (19) der Aufnahme (6) gekoppelt ist, während der in oder an der Aufnahme (6) vorgesehene Rotor (17) in das feststehende Teil (5), dem Stator (14) gegenüberliegend geführt ist.

2. Außenwirbelvorrichtung nach Anspruch 1, **dadurch gekennzeichnet, dass** die Aufnahme (6) und das feststehende Teil (5) sowie der integrierte Torquemotor (13) radial gesehen im Wesentlichen hintereinander liegen.

3. Außenwirbelvorrichtung nach einem der vorangehenden Ansprüche, **dadurch gekennzeichnet, dass** am feststehenden Teil (5) wenigstens ein mit einer Kühlmittelleitung verbindbarer Kühlmittelkanal vorgesehen ist.

4. Außenwirbelvorrichtung nach einem der vorangehenden Ansprüche, **dadurch gekennzeichnet, dass** das Wirbelaggregat (3) um eine Schwenkachse (S) verschwenkbar ist.

5. Außenwirbelvorrichtung nach Anspruch 4, **dadurch gekennzeichnet, dass** am Wirbelaggregat (3) zwei einander gegenüberliegende Lagerzapfen (20) vorgesehen sind, die in entsprechenden Lageraufnahmen einer feststehenden Aggregathalterung (9) aufgenommen sind.

6. Außenwirbelvorrichtung nach einem der vorangehenden Ansprüche, **dadurch gekennzeichnet, dass** an der Aufnahme (5) Klemmhaltemittel (27) vorgesehen sind, die bei Betätigung den Wirbelring (7) sowohl axial als auch radial klemmen.

7. Außenwirbelvorrichtung nach einem der vorangehenden Ansprüche, **dadurch gekennzeichnet, dass** die Aufnahme (6) eine federnde kegelige Anlagefläche (25) aufweist, gegen die der eine entsprechende Gegenfläche (26) aufweisende Wirbelring (7) in der Montagestellung gespannt ist.

## Claims

1. External vortex device having a vortex unit having a seat mounted rotatably relative to a fixed part for a vortex ring, and a motor drive device for driving the seat, wherein the drive device is a torque motor (13) of the type comprising an internal rotor, **characterised in that** the torque motor (13) is incorporated in the vortex unit (3) and cooperates directly with the seat (6) as a direct drive, the stator (14) of the electromagnetic torque motor (13) being incorporated in the fixed part (5) of the vortex unit (3), whilst the rotor (17) is incorporated with the seat (6), the fixed part (5) being formed substantially U-shaped with the stator (14) provided between the arms (10, 11) and being coupled by its inner arm (1) to an arm (19) of the seat (6) via at least one bearing (18), whilst the rotor (17) provided in or on the seat (6) is guided into the fixed part (5), opposite the stator (14).

2. External vortex device according to claim 1, **characterised in that** the seat (6) and the fixed part (5) together with the incorporated torque motor (13) lie substantially one behind another viewed radially.

3. External vortex device according to one of the preceding claims, **characterised in that** on the fixed part (5) at least one coolant channel is provided which is connectable to a coolant line.

4. External vortex device according to one of the preceding claims, **characterised in that** the vortex unit (3) is pivotable about a pivotal axis (S).

5. External vortex device according to claim 4, **characterised in that** two opposing journals (20) are provided on the vortex unit (3) and are received in corresponding bearing seats of a fixed unit mount (9).

6. External vortex device according to one of the preceding claims, **characterised in that** on the seat (5) clamping means (27) are provided which upon actuation clamp the vortex ring (7) both axially and radially.

7. External vortex device according to one of the preceding claims, **characterised in that** the seat (6) has a resilient spherical locating face (25), against which the vortex ring (7) having a corresponding counter-face (26) is braced in the assembled position.

## Revendications

1. Machine de fraisage externe comportant un groupe de fraisage avec un logement, monté rotatif par rapport à une partie fixe, pour une fraise creuse, ainsi qu'un dispositif d'entraînement à moteur pour actionner le logement, le dispositif d'entraînement étant un moteur couple (13) du type à rotor intérieur, **caractérisée en ce que** le moteur couple (13) est intégré dans le groupe de fraisage (3) et, sous la forme d'un système d'entraînement direct, coopère directement avec le logement (6), le stator (14) du moteur couple (13) électromagnétique étant intégré dans la partie fixe (5) du groupe de fraisage (3), alors que le rotor (17) est intégré dans le logement (6), la partie fixe (5) étant configurée sensiblement en forme de U avec le stator (14) prévu entre les branches (10, 11) et étant couplée par sa branche intérieure (11) à une branche (19) du logement (6) par l'intermédiaire d'au moins un palier (18), tandis que le rotor (17), prévu dans ou sur le logement (6), est logé dans la partie fixe (5) en face du stator (14).

2. Machine de fraisage externe selon la revendication 1, **caractérisée en ce que** le logement (6) et la partie fixe (5), ainsi que le moteur couple (13) intégré sont disposés sensiblement l'un derrière l'autre dans le sens radial.

3. Machine de fraisage externe selon l'une quelconque des revendications précédentes, **caractérisée en ce que** sur la partie fixe (5) est prévu au moins un canal de fluide de refroidissement pouvant être relié à une conduite de fluide de refroidissement.

4. Machine de fraisage externe selon l'une quelconque des revendications précédentes, **caractérisée en ce que** le groupe de fraisage (3) est apte à pivoter autour d'un axe de pivotement (S).

5. Machine de fraisage externe selon la revendication 4, **caractérisée en ce que** sur le groupe de fraisage (3) sont prévus deux tourillons (20) face à face, qui sont logés dans des logements de palier correspondants d'un système de fixation (9) fixe.

6. Machine de fraisage externe selon l'une quelconque des revendications précédentes, **caractérisée en ce que** sur le logement (6) sont prévus des moyens de fixation par serrage (27), qui lors de l'actionnement de la fraise creuse (7) serrent dans le sens axial de même que dans le sens radial.

7. Machine de fraisage externe selon l'une quelconque des revendications précédentes, **caractérisée en ce que** le logement (6) comporte une surface d'appui (25) flexible conique, contre laquelle la fraise creuse (7), munie d'une surface complémentaire (26) correspondante, est serrée dans la position de montage.
